# EUROPEAN PATENT SPECIFICATION

(11) **EP 4 369 906 B1**
(45) Date of publication and mention of the grant of the patent: **02.09.2026**
(21) Application number: 22760836.1
(22) Date of filing: 18.07.2022
(51) Int. Cl.: A01D 61/00, A01D 41/16

(54) **PLATFORM HEADER WITH BELT FEEDER ASSEMBLY**
PLATTFORMKOPFTEIL MIT BANDZUFÜHRUNGSANORDNUNG
BEC CUEILLEUR À PLATEFORME DOTÉ D'UN ENSEMBLE DISPOSITIF D'ALIMENTATION À COURROIE

(30) Priority: 16.07.2021 US 202163222558 P
(43) Date of publication of application: 22.05.2024
(73) Proprietor: MacDon Industries Ltd., Winnipeg Manitoba R3J 3S3 (CA)
(72) Inventor: LACY, Nolan, Rio, WI 53960 (US); HUNDT, Karl, Lake Mills, Wisconsin 53551 (US); DIETSCHE, Scott, Colfax, WI 54730 (US); SHEARER, Bruce, Winnipeg, Manitoba, R3R 1A2 (CA); ENNS, John, Paul Manitoba, R2E 1A9 (CA)
(74) Representative: Jostarndt Patentanwalts-AG
(86) International application number: PCT/US2022/037438
(87) International publication number: WO 2023/288124

(56) References cited:
- EP-A1- 3 213 625
- US-A- 4 271 660
- US-A1- 2017 172 068
- US-A1- 2020 022 304

## Description

### CROSS-REFERENCE TO RELATED APPLICATIONS

This application claims priority to United States Provisional Application No. 63/222,558, filed July 16, 2021.

### BACKGROUND OF THE INVENTION

### 2. Field of the Invention

The present invention relates to a platform header for harvesting crops, and more particularly, to a platform header with a belt driven feeder assembly.

### 3. Description of the Related Art

Platform headers for harvesting agricultural crops are known in the art. Typical platform headers include a header frame with a horizontal front portion and a sloped rear portion each extending laterally between a pair of opposite sides. The front and rear portions of the platform header are often bisected by a laterally extending wall having a central aperture for transferring crops from the front portion to the rear portion of the header frame. A crop pick-up reel is mounted on the header frame for engaging the crops, and a cutting assembly is operatively coupled across the front portion of the platform header for cutting the crops. Typical platform headers further include a transport assembly, such as an auger or a belt, extending between the opposite sides of the header frame at the front portion thereof for transporting the crops to the central aperture. After reaching the rear portion of the header frame through the central aperture, the crops are conveyed from a lower end to an upper end of the rear portion by a conveyor system for further processing of the crops by an agricultural machine, such as a combine. However, platform headers known in the art having a wall with a central aperture and a transport assembly to transfer crops thereto can be costlier to produce and often sacrifice harvesting efficiency in order to converge the crops for transport through the central aperture of the wall. EP3213625 is directed toward a feeder for a combine harvester, the feeder including a housing and a conveyor assembly mounted in the housing, the conveyor assembly including a frame having lateral support arms, and moveable belts guided by sprocket wheels. The sprocket wheels are mounted on a drive shaft proximate an outlet section of the housing and on a conveyor shaft proximate an inlet section of the housing. The sprocket wheels are mounted on a drive shaft proximate an outlet section of the housing and on a conveyor shaft proximate an inlet section.

The disclosure of US 4,271,660 is directed toward a combine conveyor apparatus having a combine auger conveyor apparatus mounted on a conventional combine structure. The combine auger conveyor apparatus includes a feeder auger conveyor assembly which transfers cut wheat or the like to a feeder slat conveyor assembly which, in turn, conveys the cut material into a threshing cylinder assembly. The feeder auger conveyor assembly has spiral flights on a cylindrical support driven to move the material to the center thereof and has a central auger retractable finger assembly to move the material into the feeder slat conveyor assembly. The feeder slat conveyor assembly includes a first sprocket assembly connected by a feeder chain and slat assembly to a second sprocket assembly.

### SUMMARY OF THE INVENTION

A platform header according to appended independent claim 1 for harvesting agricultural crops in a field comprises a header frame extending between a front portion and opposite rear portion and laterally between opposite sides. A cutting assembly is operatively coupled to the front portion for cutting the crops to be harvested and a belt feeder assembly is coupled to the header frame for transporting the cut crops from the cutting assembly across the rear portion of the header frame to an agricultural machine. The belt feeder assembly includes a front drum having an outer wall adjacent the cutting assembly, a rear drum spaced from the front drum along the rear portion of the header frame, and a conveyor tensioned between the front and rear drum for carrying the cut crop across the rear portion of the header frame. A drive system is mounted on the header frame and operatively coupled to one of the front or rear drums for rotatably driving the belt feeder assembly. The front drum includes a plurality of fingers extending radially outwardly therefrom and adapted to pull the crops under the front drum to the rear portion of the header frame. Each of the fingers is operatively coupled between a fixed shaft extending axially through the front drum and a slot formed in the outer wall of the front drum, whereby the fingers protrude at varying distances from the outer wall as the front drum rotates about the fixed shaft to avoid interference with the conveyor.

### BRIEF DESCRIPTION OF THE DRAWINGS

Advantages of the present disclosure will be readily appreciated as the same becomes better understood by reference to the following detailed description when considered in connection with the accompanying drawings, wherein:
Figure 1 is a perspective view of a platform header according to a primary embodiment of the present invention;
Figure 2 is an enlarged fragmentary side view of the platform header of Figure 1 showing a cutting assembly adjustable forwardly and rearwardly relative to a header frame to accommodate different types of crops and crop conditions;
Figure 3 is a fragmentary cross-sectional view of the platform header of Figure 1 showing a front portion and a rear portion of the header frame;
Figure 4 is a fragmentary side view of the platform header of Figure 1 showing a belt feeder assembly;
Figure 5 is a fragmentary front view of the platform header of Figure 1 showing a planar floor having a plurality of low-friction, wear-resistant elements fixedly coupled thereto;
Figure 6 is a fragmentary perspective view of the platform header of Figure 1 showing the belt feeder assembly;
Figure 7 is a fragmentary front view of the platform header of Figure 1 further showing the belt feeder assembly;
Figure 8 is a fragmentary perspective view of the platform header of Figure 1 showing a rear drum of the belt feeder assembly;
Figure 9 is a fragmentary perspective view of the platform header of Figure 1 showing a front drum of the belt feeder assembly;
Figure 10 is an enlarged fragmentary cross-sectional view of the platform header of Figure 1 showing the front drum having a plurality of fingers extending radially therefrom;
Figure 11 is a fragmentary perspective view of the header of Figure 1 showing a shaft and the plurality of fingers extending radially therefrom, the fingers rotatable about an offset rotational axis of the shaft eccentric to a central rotational axis of the front drum;
Figure 12 is an enlarged fragmentary side view of the header of Figure 1 further showing the shaft and the plurality of fingers extending radially therefrom; and
Figure 13 is an enlarged fragmentary top view of the header of Figure 1 with the front drum removed to further show the shaft and the plurality of fingers extending radially therefrom.

### DETAILED DESCRIPTION OF THE EMBODIMENTS

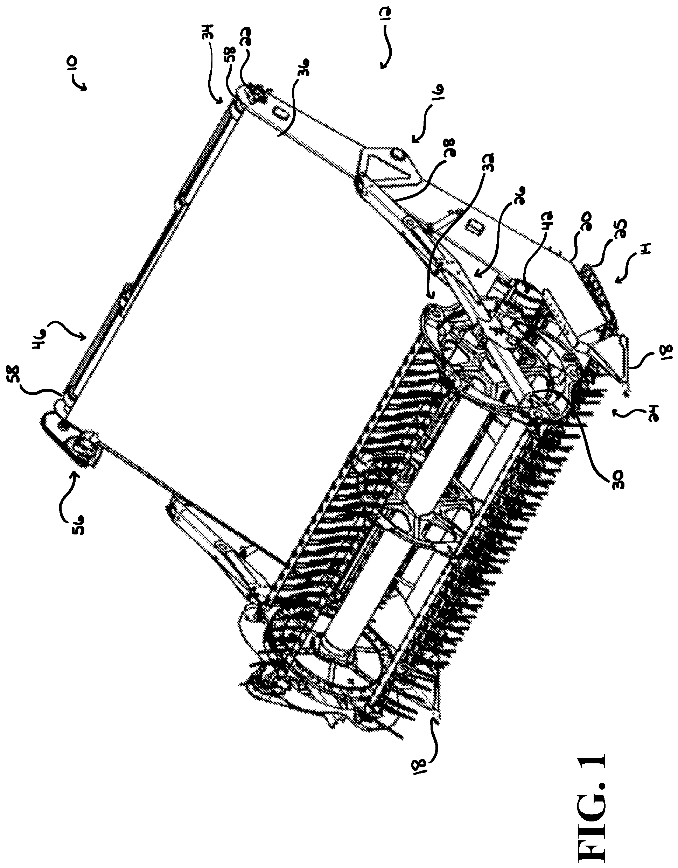

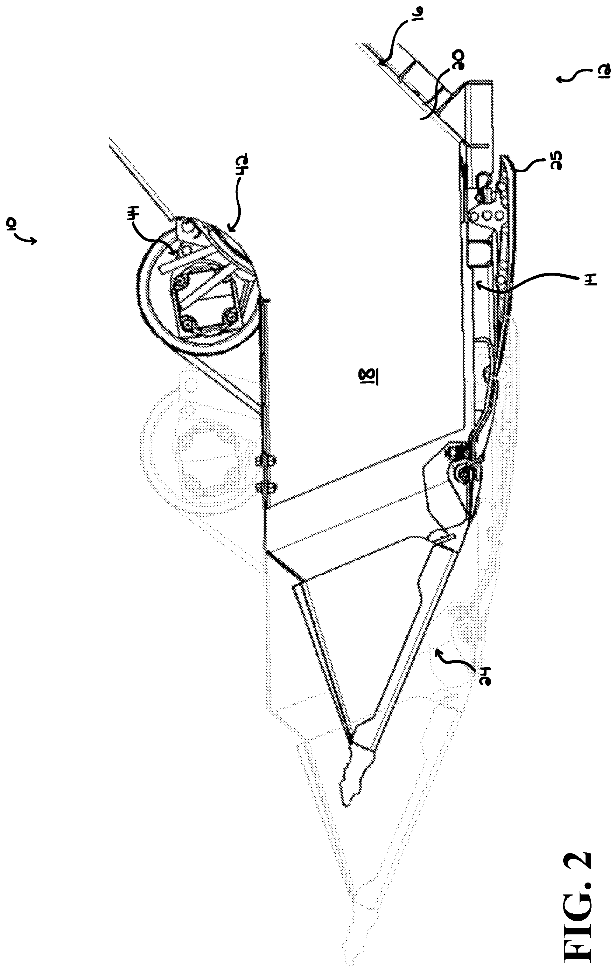

Referring to the Figures, wherein like numerals indicate like or corresponding parts throughout the several views, a platform header for harvesting agricultural crops within a field is shown generally at 10. The platform header 10 includes a header frame 12 with a generally horizontal front portion 14 and a sloped rear portion 16 each extending laterally between a pair of opposite sides 18. The rear portion 16 of the header frame 12 includes a lower end 20 positioned adjacent to the front portion 14 of the header frame 12 and an upper end 22 spaced upwardly and rearwardly therefrom, the upper end 22 arranged to transfer crops to an agricultural machine, such as a combine, for further processing. A conventional cutting assembly 24, such as a cutter bar, is operatively coupled across the front portion 14 of the header frame 12 between the opposite sides 18 thereof for cutting the crops to be harvested. The cutting assembly 24 is manually adjustable forwardly and rearwardly relative to the header frame as is known in the art to optimize cutting and harvesting of various crops in various crop conditions, as shown in Figure 2. Referring to Figures 1-3, the platform header 10 further includes conventional ground engaging members, or skid shoes, 25 mounted under the front portion 14 of the header frame 12 at each of the opposite sides 18 thereof. Each of the ground engaging members 25 is adapted for engaging a surface of the field to reduce friction between the surface and the header frame 12 as the platform header 10 moves across the field.

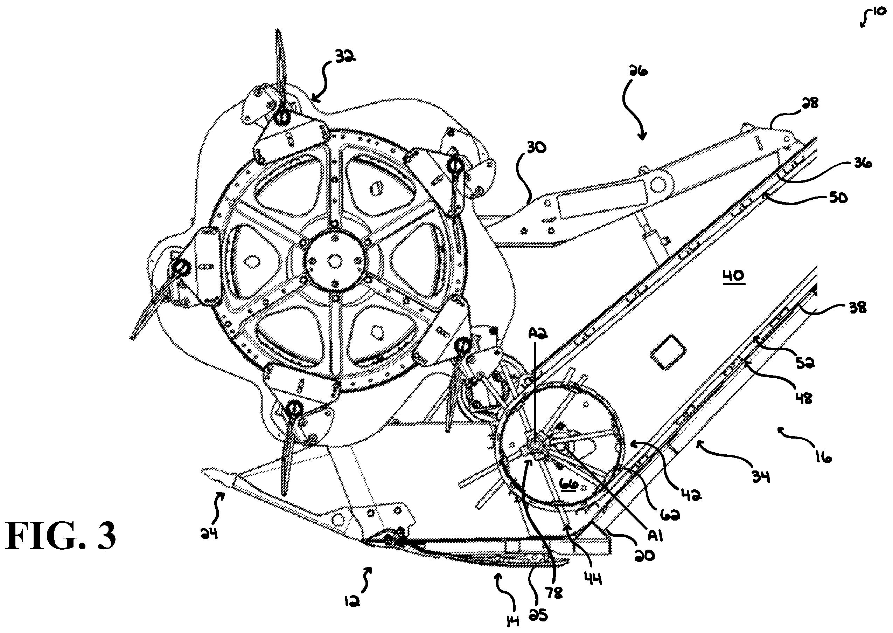

Referring to Figures 1 and 3, the platform header 10 further includes a pair of support arms 26 extending between a proximal end 28 fixedly coupled to the rear portion 16 of the header frame 12 and an opposite distal end 30 spaced above the front portion 14 of the header frame 12. A conventional crop pick-up reel 32 is rotatably coupled between the distal ends 30 of the support arms 26 for engaging the crops cut by the cutting assembly 24. Referring again to Figures 1 and 3, a belt feeder assembly 34 is operatively coupled between the opposite sides 18 of the header frame 12 at the rear portion 16 thereof. The belt feeder assembly 34 receives cut crops from the crop pick-up reel 32 and conveys the crops from the lower end 20 to the upper end 22 of the rear portion 16, where the crops are ultimately transferred to the agricultural machine for further processing.

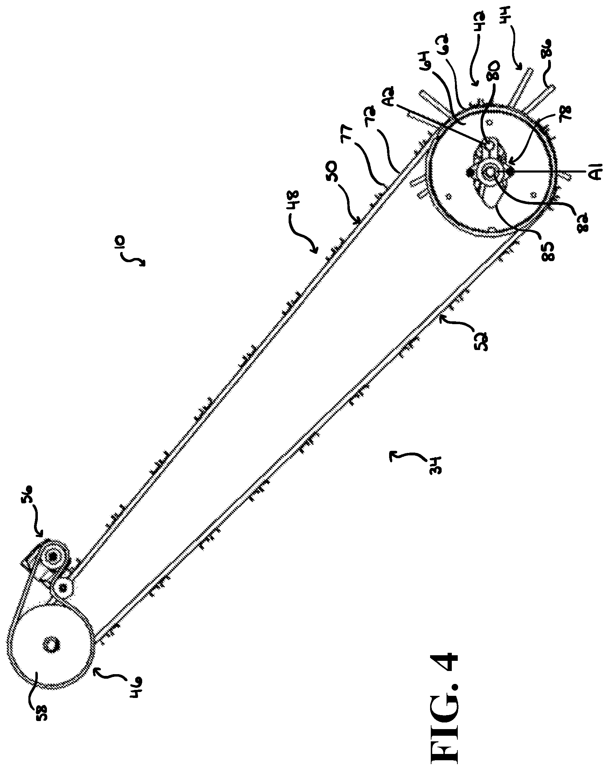

Referring to Figures 1 and 3, the rear portion 16 of the header frame 12 includes a planar ceiling 36 and a planar floor 38 fixedly coupled between the opposite sides 18 of the header frame 12 and extending from the lower end 20 to the upper end 22 thereof. The ceiling 36 and the floor 38 are spaced apart horizontally between the opposite sides 18 of the header frame 12 to define an interior space 40 therebetween. Referring to Figures 3 and 4, the belt feeder assembly 34 is mounted in the interior space 40 for transporting the cut crops up the rear portion 16 of the header frame 12. The belt feeder assembly 34 includes a front drum 42 and a rear drum 46 with a conveyor 48 tensioned therebetween. The front drum 42 defines a central rotational axis A1 and is rotatably coupled between the opposite sides 18 of the header frame 12 adjacent to the lower end 20 of the rear portion 16, as shown in Figure 3. The front drum 42 includes a plurality of fingers 44 extending radially outward therefrom, the fingers 44 adapted to pull the crops under the front drum 42 for conveying the crops up the rear portion 16 of the header frame 12. Referring to Figure 1, the rear drum 46 is rotatably coupled between the opposite sides 18 of the header frame 12 adjacent to the upper end 22 of the rear portion 16.

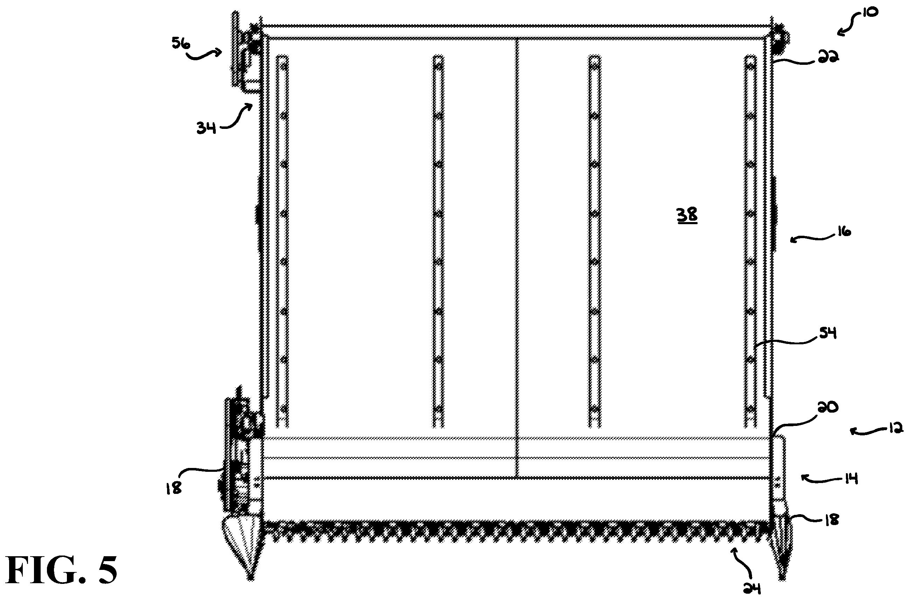

Referring to Figure 3, the conveyor 48 includes a top run 50 positioned adjacent to the ceiling 36 and a bottom run 52 positioned adjacent to the floor 38. A plurality of low-friction, wear-resistant elements 54 are fixedly coupled to the floor 38 and extend between the lower and upper ends 20, 22 of the rear portion 16, as shown in Figure 5, for reducing friction between the floor 38 and the bottom run 52 of the conveyor 48. Referring to Figures 4, 6, and 7, a drive system 56, such as a pulley and belt system or a chain and sprocket system, is mounted on the platform header 10 adjacent to the rear drum 46 and is operatively coupled to the rear drum 46 as is known in the art for rotatably driving the belt feeder assembly 34.

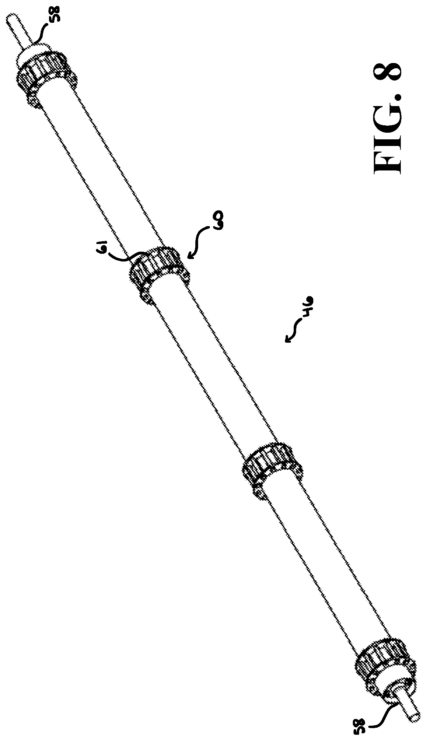

Referring to Figures 1 and 8, the rear drum 46 extends between a pair of opposite ends 58 rotatably coupled to the opposite sides 18 of the header frame 12. The rear drum 46 also has a plurality of sprockets 60 fixedly coupled thereto. The sprockets 60 are spaced laterally apart between the ends 58 of the rear drum 46, and each sprocket 60 includes a plurality of projections 61 adapted for operatively engaging and driving the conveyor 48 as the drive system 56 rotates the rear drum 46, as described in further detail below.

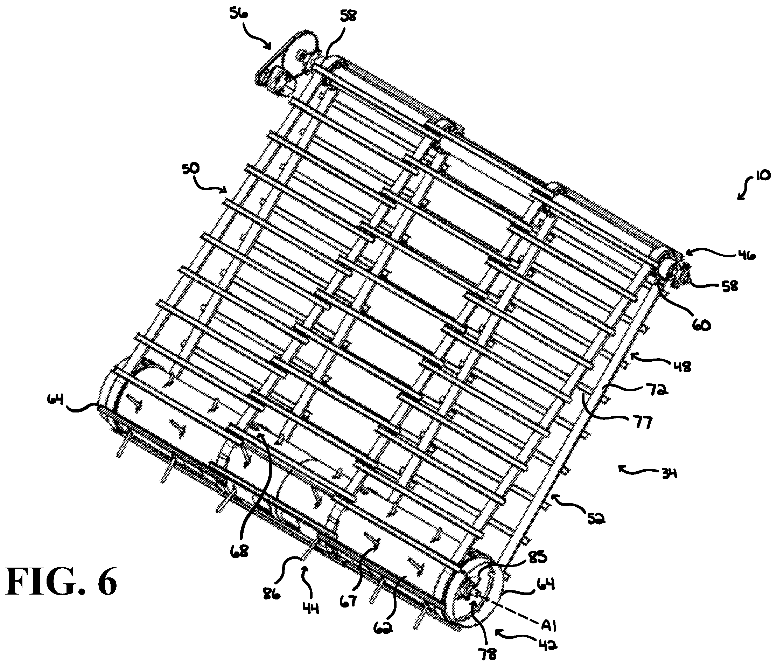

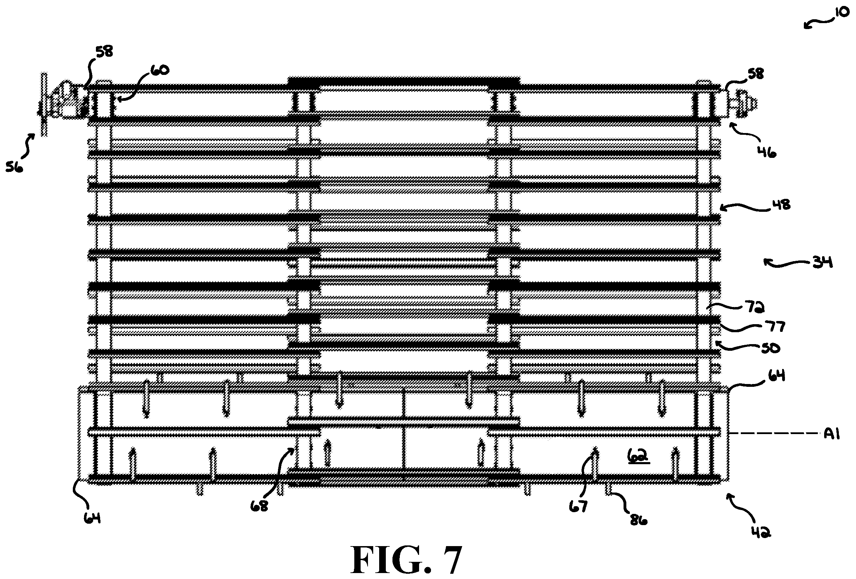

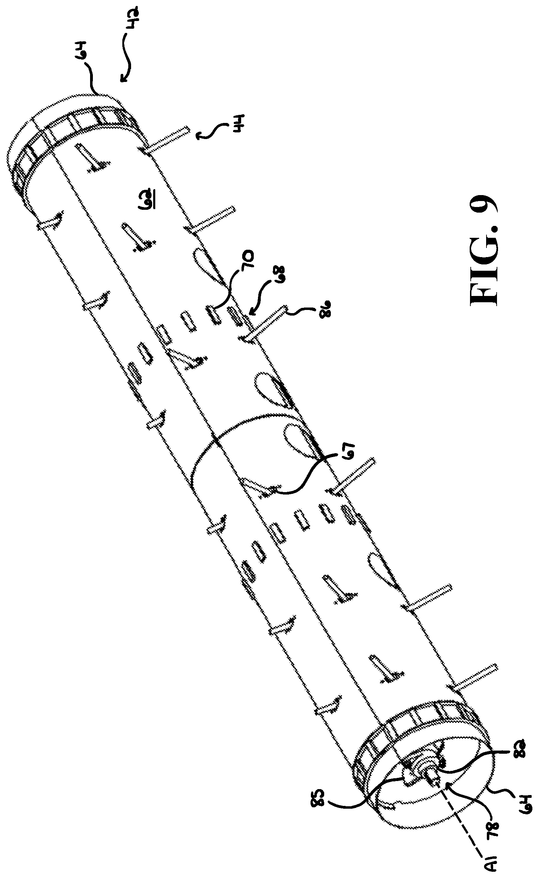

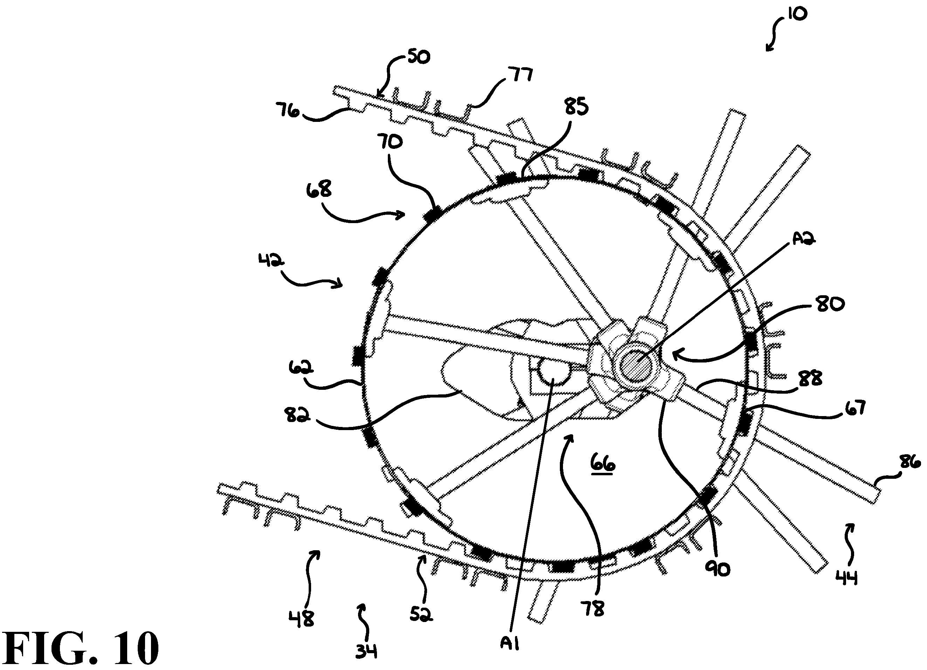

Referring to Figures 9 and 10, the front drum 42 includes an outer wall 62 surrounding an interior space 66, the outer wall 62 extending between a pair of opposite ends 64 positioned adjacent to the opposite sides 18 of the header frame 12. A plurality of slots 67 extend through the outer wall 62 into the interior space 66, the slots 67 positioned around the circumference of the front drum 42 and spaced laterally between the ends 64 thereof. The front drum 42 further includes a plurality of cogs 68 spaced apart on the outer wall 62 between the ends 64 thereof, the cogs 68 laterally aligned across the front drum 42 with the sprockets 60 on the rear drum 46. Each cog 68 includes a plurality of projections 70 extending radially outward from and circumferentially around the outer wall 62 of the front drum 42 for operatively engaging the conveyor 48, as shown in Figure 10. Referring to Figures 6 and 7, the conveyor 48 includes a plurality of belts 72, each belt 72 tensioned between the respective laterally-aligned sprockets 60 and cogs 68 for driving the conveyor 48 and rotatably linking the front and rear drums 42, 46. The belts 72 each contain a plurality of inward extending projections 76 to mesh with projections 61, 70 on the sprockets 60 and cogs 68 of the front and rear drums 42, 46, as shown in Figure 10, to prevent relative movement, or slip, between the belts 72 and the front and rear drums 42, 46 during operation of the belt feeder assembly 34. Referring to Figures 6, 7, and 10, a plurality of slats 77 extend laterally between adjacent belts 72 of the conveyor 48. The slats 77 are adapted and arranged to engage the crops received from the front drum 42 for transporting the crops up the rear portion 16 of the header frame 12 between the floor 38 and the bottom run 52 of the conveyor 48.

The embodiment of the platform header 10 shown in the Figures includes four sprockets 60 and four cogs 68 spaced substantially equidistant between the ends 58, 64 of the rear and front drums 46, 42. Each belt 72 is tensioned between the respective laterally-aligned sprockets 60 and cogs 68, with the slats 77 extending therebetween. However, it is to be appreciated that front and rear drums can include any number or arrangement of sprockets 60, cogs 68, belts 72, and slats 77 as is necessary to optimally convey the crops up the rear portion 16 of the header frame 12 without varying the scope of the invention.

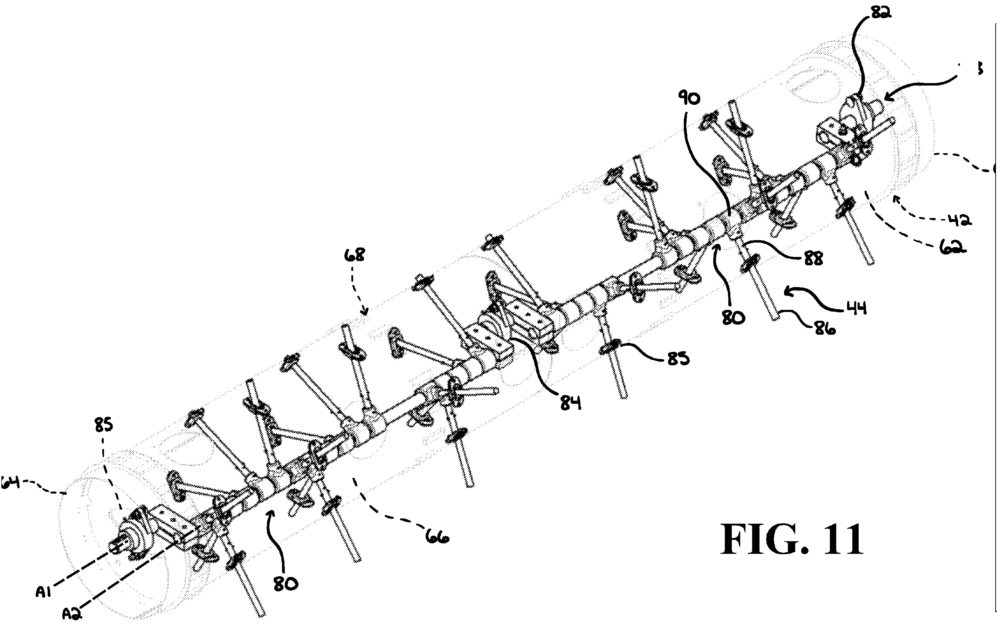

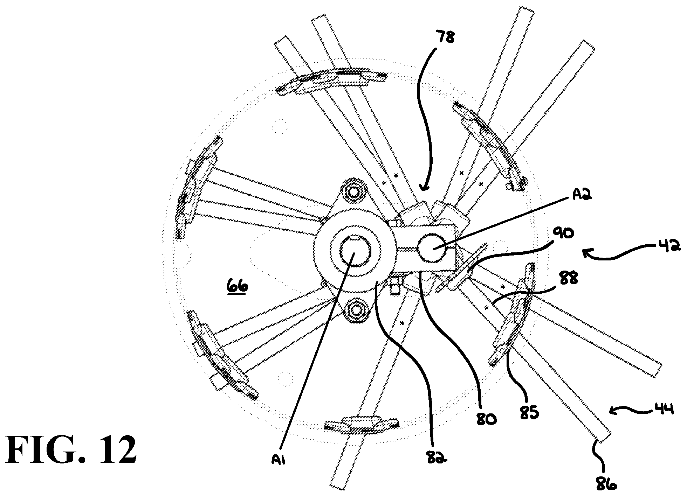

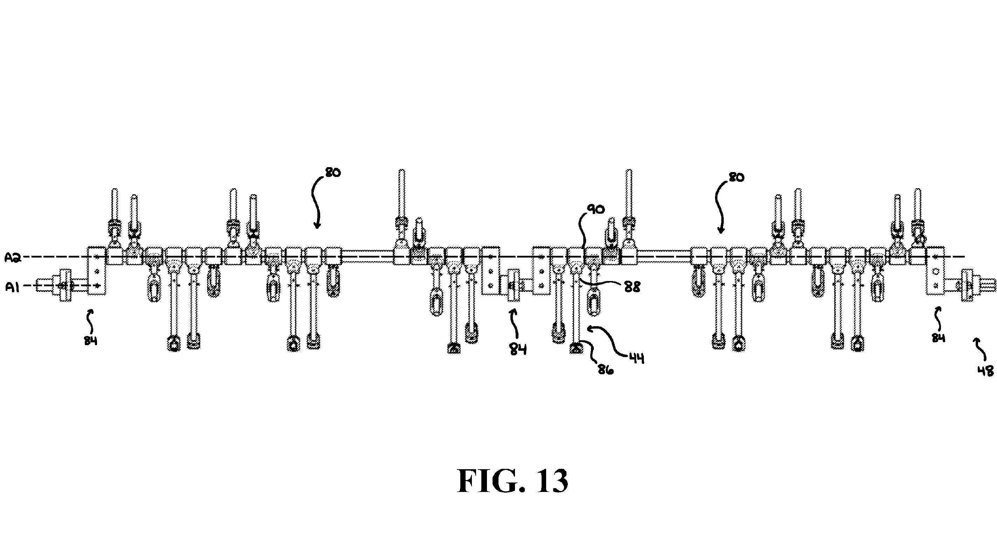

Referring to Figures 10-13, a shaft 78 is mounted in the interior space 66 of the front drum 42. The shaft 78 includes a pair of offset portions 80, each of which is fixed between a lateral end portion 82 of the shaft 78 and a center portion 84 of the shaft 78. The end portions 82 of the shaft 78 extend through an aperture 85 at each end 64 of the front drum 42 generally along the central rotational axis A1, as shown in Figure 9. The end portions 82 of the shaft 78 are fixedly coupled to the opposite sides 18 of the header frame 12, thereby keeping the shaft 78 stationary relative to the header frame 12 and allowing the front drum 42 to rotate relative to the shaft 78 around the central rotational axis A1. Referring to Figures 11 and 12, the fingers 44 extend between a radially outer end 86 and a radially inner end 88, the radially inner ends 88 of each finger 44 fixedly coupled to a coupling element 90. The coupling elements 90 of the fingers 44 are rotatably coupled to the offset portions 80 of the shaft 78 to define an offset rotational axis A2 adjacent and eccentric to the central rotational axis A1. Each of the fingers 44 extends radially outward from the offset portions 80 of the shaft 78 and through one of the slots 67 in the outer wall 62 of the front drum 42, and each of the fingers 44 remains engaged through the respective slot 67 as the front drum 42 rotates around the central rotational axis A1.

Referring to Figures 10 and 11, the fingers 44 extending through the respective slots 67 are forced to rotate about the offset rotational axis A2 by the slots 67 as the front drum 42 is driven around the central rotational axis A1. Positioning of the slots 67 relative to the cogs 68 on the front drum 42 allows the slats 77 of the conveyor 48 to be timed with the rotation of the front drum 42 such that the fingers 44 remain positioned between, and therefore do not interfere with, the slats 77 during operation of the platform header 10 or contact the ceiling 36 or floor 38 of the belt feeder assembly 34, as shown in Figures 3, 6 and 10. Furthermore, due to the offset rotational axis A2 of the shaft 78, each of the fingers 44 protrudes at varying distances from the outer wall 62 of the front drum 42 depending on the angular position of each finger 44. For example, as shown in Figures 1 and 12, the radially outer ends 86 of the fingers 44 that are extending forwardly from the front drum 42 protrude farther than the radially outer ends 86 of the fingers 44 that are extending rearwardly from the front drum 42, which allows the fingers 44 to engage the crops for pulling the crops under the front drum 42 without causing the fingers 44 to interfere with the ceiling 36 or the floor 38.

In operation, the platform header 10 is mounted on the agricultural machine as is known in the art and travels along the field containing the crops to be harvested. Prior to harvesting, an operator actuates the drive system 56, which rotates the rear drum 46 clockwise when viewed from Figure 4 and counterclockwise when viewed from Figure 6. Rotation of the rear drum 46 drives the belts 72 to correspondingly rotate the front drum 42 clockwise when viewed from Figures 4 and 10 and counterclockwise when viewed from Figures 3 and 6 around the central rotational axis A1. Rotation of the front drum 42 around the central rotational axis A1 forces the fingers 44 to correspondingly rotate about the offset rotational axis A2 as the fingers 44 are pushed by the slots 67 in the outer wall 62 of the front drum 42. During rotation of the conveyor 48, the projections 76 on each belt 72 engage the projections 61, 70 on the respective sprockets and cogs 60, 68 to prevent relative movement therebetween, thereby ensuring the fingers 44 remain properly timed between the slats 77. As the fingers 44 rotate on the offset portions 80 of the shaft 78 about the offset rotational axis A2, the fingers 44 extending generally forwardly from the front drum 42 extend farther than the fingers 44 extending generally rearwardly from the front drum 42, which are substantially flush with the outer wall 62, thereby preventing the fingers 44 from contacting the ceiling 36 and floor 38 during rotation of the front drum 42.

Once the drive system 56 is actuated and the operator begins harvesting, the crops first engage the crop pick-up reel 32 and are subsequently cut by the cutting assembly 24. The cut crops are then transitioned from the cutting assembly 24 to the front drum 42 by the crop pick-up reel 32. The fingers 44, rotating about the offset rotational axis A2, pull the crops under the front drum 42 between the floor 38 and the bottom run 52 of the conveyor 48. The crops are then carried from the lower end 20 to the upper end 22 of the rear portion 16 by the slats 77 as the conveyor 48 rotates between the front drum 42 and the rear drum 46, as described above. After reaching the upper end 22 of the rear portion 16, the crops are transferred to the agricultural machine for further processing.

The invention has been described in an illustrative manner, and it is to be understood that the terminology which has been used is intended to be in the nature of words of description rather than of limitation. Directional references employed or shown in the description or figures, such as top, bottom, upper, lower, upward, downward, lengthwise, widthwise, longitudinal, lateral, and the like, are relative terms employed for ease of description and are not intended to limit the scope of the invention in any respect other than what is defined in the appended claims. Many modifications and variations of the present invention are possible in light of the above teachings. It is, therefore, to be understood that within the scope of the appended claims, the invention may be practiced other than as specifically described.

## Claims

1. A platform header (10) for use with an agricultural machine for harvesting agricultural crops in a field comprising:
a header frame (12) extending between a front portion (14) and opposite rear portion (16) and laterally between opposite sides (18);
a cutting assembly (24) operatively coupled to the front portion (14) between the opposite sides (18) for cutting the crops to be harvested;
a pair of support arms (26) extending between a proximal end (28) fixedly coupled to the rear portion (16) of the header frame (12) and an opposite distal end (30) spaced above the front portion (14) of the header frame (12);
a crop pick-up reel (32) rotatably coupled between the distal ends (30) of the support arms (26) for engaging the crops cut by the cutting assembly (24);
a belt feeder assembly (34) coupled to the header frame (12) for receiving cut crops from the crop pick-up reel (32) and transporting the cut crops across the rear portion (16) of the header frame (12) to the agricultural machine, said belt feeder assembly (34) including a front drum (42) having an outer wall (62) adjacent the cutting assembly (24), a rear drum (46) spaced from the front drum (42) along the rear portion (16) of the header frame (12), and a conveyor (48) tensioned between the front and rear drum (42, 46) for carrying the cut crop across the rear portion (16) of the header frame (12), wherein the outer wall (62) of the front drum (42) extends between a pair of opposite ends (64) positioned adjacent to the opposite sides (18) of the header frame (12);
a drive system (56) mounted on the header frame (12) and operatively coupled to one of the front or rear drums (42, 46) for rotatably driving the belt feeder assembly (34);
wherein the front drum (42) includes a plurality of fingers (44) extending radially outwardly therefrom and adapted to pull the crops under the front drum (42) to the rear portion (16) of the header frame (12), each of the fingers (44) operatively coupled between a fixed shaft (78) extending axially through the front drum (42) and a slot (67) formed in the outer wall (62) of the front drum (42), whereby the fingers (44) protrude at varying distances from the outer wall (62) as the front drum (42) rotates about the fixed shaft (78) to avoid interference with the conveyor (48).

2. The platform header (10) as set forth in claim 1 wherein the opposite ends (64) of the front drum (42) define a central rotational axis (A1) therebetween and are rotatably coupled between the opposite sides (18) of the header frame (12).

3. The platform header (10) as set forth in claim 2 wherein the rear drum (46) extends between opposite ends (58) rotatably coupled to the opposite side (18) of the header frame (12).

4. The platform header (10) as set forth in claim 3 wherein the fixed shaft (78) includes opposite end portions (82) fixedly coupled to the opposite sides (18) of the header frame (12) and at least one offset portion (80) between the end portions (82) defining an offset rotational axis (A2) eccentric to the central rotational axis (A1) of the front drum (42).

5. The platform header (10) as set forth in claim 4 wherein the fingers (44) extend between a radially outer end (86) extending through said respective slots (67) in the front drum (42) and an opposite radially inner end (88) rotatably coupled to the offset portion (80) of the fixed shaft (78).

6. The platform header (10) as set forth in claim 5 wherein the rear drum (46) includes at least one sprocket (60) fixedly coupled thereto and spaced laterally between the ends (58) of the rear drum (46), wherein each of the sprockets (60) includes a plurality of projections (61) adapted for operatively engaging and driving the conveyor (48) as the drive system (56) rotates the rear drum (46).

7. The platform header (10) as set forth in claim 6 wherein the front drum (42) includes at least one cog (68) spaced apart on the outer wall (62) between the ends (64) thereof, the cogs (68) laterally aligned across the front drum (42) with the sprockets (60) on the rear drum (46).

8. The platform header (10) as set forth in claim 7 wherein each of the cogs (68) includes a plurality of projections (70) extending radially outward from and circumferentially around the outer wall (62) of the front drum (42) for operatively engaging the conveyor (48).

9. The platform header (10) as set forth in claim 8 wherein the conveyor (48) includes at least one belt (72) operatively coupled between the sprocket (60) and cog (68) for driving the conveyor (48) and rotatably linking the front and rear drums (42, 46).

10. The platform header (10) as set forth in claim 9 wherein the belt (72) includes a plurality of inwardly extending projections (76) adapted to mesh with the projections (61) on the sprocket (60) and the projections (70) on the cogs (68) of the front and rear drums (42, 46) to prevent relative movement between the belt (72) and the front and rear drums (42, 46).

11. The platform header (10) as set forth in claim 10 further including a plurality of slats (77) extending laterally across the conveyor (48) adapted to engage the cut crops received from the front drum (42) for transporting the crop across the rear portion (16) of the header frame (12).

12. The platform header (10) as set forth in claim 11 wherein the rear portion (16) of the header frame (12) includes a planar ceiling (36) and a planar floor (38) horizontally spaced apart and fixedly coupled between opposite sides (18) of the header frame (12) defining an interior (40) spaced therebetween.

13. The platform header (10) as set forth in claim 12 wherein the belt feeder assembly (34) is mounted in the interior space (40) between the ceiling (36) and floor (38).

## Patentansprüche

1. Ein Plattformschneidwerk (10) zur Verwendung mit einer landwirtschaftlichen Maschine zum Ernten landwirtschaftlicher Kulturpflanzen auf einem Feld, umfassend:
einen Schneidwerksrahmen (12), der sich zwischen einem vorderen Abschnitt (14) und einem gegenüberliegenden hinteren Abschnitt (16) sowie seitlich zwischen gegenüberliegenden Seiten (18) erstreckt;
eine Schneidanordnung (24), die zum Schneiden der zu erntenden Kulturpflanzen zwischen den gegenüberliegenden Seiten (18) betriebsmäßig mit dem vorderen Abschnitt (14) gekoppelt ist;
ein Paar Tragarme (26), die sich jeweils zwischen einem proximalen Ende (28), das fest mit dem hinteren Abschnitt (16) des Schneidwerksrahmens (12) gekoppelt ist, und einem gegenüberliegenden distalen Ende (30), das mit Abstand oberhalb des vorderen Abschnitts (14) des Schneidwerksrahmens (12) angeordnet ist, erstrecken;
eine Erntegutaufnahmehaspel (32), die zum Erfassen der von der Schneidanordnung (24) geschnittenen Kulturpflanzen drehbar zwischen den distalen Enden (30) der Tragarme (26) gekoppelt ist;
eine Bandzuführanordnung (34), die mit dem Schneidwerksrahmen (12) gekoppelt ist, um geschnittene Kulturpflanzen von der Erntegutaufnahmehaspel (32) aufzunehmen und die geschnittenen Kulturpflanzen über den hinteren Abschnitt (16) des Schneidwerksrahmens (12) zu der landwirtschaftlichen Maschine zu transportieren, wobei die Bandzuführanordnung (34) eine vordere Trommel (42) mit einer der Schneidanordnung (24) benachbarten Außenwand (62), eine hintere Trommel (46), die entlang des hinteren Abschnitts (16) des Schneidwerksrahmens (12) mit Abstand von der vorderen Trommel (42) angeordnet ist, und einen zwischen der vorderen und der hinteren Trommel (42, 46) gespannten Förderer (48) zum Befördern der geschnittenen Kulturpflanzen über den hinteren Abschnitt (16) des Schneidwerksrahmens (12) aufweist, wobei sich die Außenwand (62) der vorderen Trommel (42) zwischen einem Paar gegenüberliegender Enden (64) erstreckt, die benachbart zu den gegenüberliegenden Seiten (18) des Schneidwerksrahmens (12) angeordnet sind;
ein Antriebssystem (56), das an dem Schneidwerksrahmen (12) montiert und zum drehenden Antreiben der Bandzuführanordnung (34) betriebsmäßig mit einer von der vorderen oder der hinteren Trommel (42, 46) gekoppelt ist;
wobei die vordere Trommel (42) eine Mehrzahl von Fingern (44) aufweist, die sich von dieser radial nach außen erstrecken und dazu eingerichtet sind, die Kulturpflanzen unter der vorderen Trommel (42) hindurch zu dem hinteren Abschnitt (16) des Schneidwerksrahmens (12) zu ziehen, wobei jeder der Finger (44) betriebsmäßig zwischen einer feststehenden Welle (78), die sich axial durch die vordere Trommel (42) erstreckt, und einem in der Außenwand (62) der vorderen Trommel (42) ausgebildeten Schlitz (67) gekoppelt ist, wodurch die Finger (44) bei einer Drehung der vorderen Trommel (42) um die feststehende Welle (78) in unterschiedlichen Abständen aus der Außenwand (62) vorstehen, um eine Beeinträchtigung durch den Förderer (48) zu vermeiden.

2. Plattformschneidwerk (10) nach Anspruch 1, wobei die gegenüberliegenden Enden (64) der vorderen Trommel (42) eine zwischen ihnen verlaufende zentrale Drehachse (A1) definieren und drehbar zwischen den gegenüberliegenden Seiten (18) des Schneidwerksrahmens (12) gekoppelt sind.

3. Plattformschneidwerk (10) nach Anspruch 2, wobei sich die hintere Trommel (46) zwischen gegenüberliegenden Enden (58) erstreckt, die drehbar mit der gegenüberliegenden Seite (18) des Schneidwerksrahmens (12) gekoppelt sind.]

4. Plattformschneidwerk (10) nach Anspruch 3, wobei die feststehende Welle (78) gegenüberliegende Endabschnitte (82), die fest mit den gegenüberliegenden Seiten (18) des Schneidwerksrahmens (12) gekoppelt sind, und wenigstens einen zwischen den Endabschnitten (82) angeordneten Versatzabschnitt (80) aufweist, der eine gegenüber der zentralen Drehachse (A1) der vorderen Trommel (42) exzentrische versetzte Drehachse (A2) definiert.

5. Plattformschneidwerk (10) nach Anspruch 4, wobei sich die Finger (44) jeweils zwischen einem radial äußeren Ende (86), das sich durch den jeweiligen Schlitz (67) in der vorderen Trommel (42) erstreckt, und einem gegenüberliegenden radial inneren Ende (88), das drehbar mit dem Versatzabschnitt (80) der feststehenden Welle (78) gekoppelt ist, erstrecken.

6. Plattformschneidwerk (10) nach Anspruch 5, wobei die hintere Trommel (46) wenigstens ein Kettenrad (60) aufweist, das fest mit dieser gekoppelt und seitlich zwischen den Enden (58) der hinteren Trommel (46) angeordnet ist, wobei jedes der Kettenräder (60) eine Mehrzahl von Vorsprüngen (61) aufweist, die dazu eingerichtet sind, den Förderer (48) betriebsmäßig in Eingriff zu nehmen und anzutreiben, wenn das Antriebssystem (56) die hintere Trommel (46) dreht.

7. Plattformschneidwerk (10) nach Anspruch 6, wobei die vordere Trommel (42) wenigstens einen Zahnkranz (68) aufweist, der auf der Außenwand (62) zwischen deren Enden (64) angeordnet ist, wobei die Zahnkränze (68) über die vordere Trommel (42) hinweg seitlich mit den Kettenrädern (60) an der hinteren Trommel (46) ausgerichtet sind.

8. Plattformschneidwerk (10) nach Anspruch 7, wobei jeder der Zahnkränze (68) eine Mehrzahl von Vorsprüngen (70) aufweist, die sich zum betriebsmäßigen Eingreifen in den Förderer (48) radial nach außen von der Außenwand (62) der vorderen Trommel (42) und in Umfangsrichtung um diese herum erstrecken.

9. Plattformschneidwerk (10) nach Anspruch 8, wobei der Förderer (48) wenigstens ein Band (72) aufweist, das zum Antreiben des Förderers (48) und zum drehbaren Verbinden der vorderen und der hinteren Trommel (42, 46) betriebsmäßig zwischen dem Kettenrad (60) und dem Zahnkranz (68) gekoppelt ist.

10. Plattformschneidwerk (10) nach Anspruch 9, wobei das Band (72) eine Mehrzahl von sich nach innen erstreckenden Vorsprüngen (76) aufweist, die dazu eingerichtet sind, mit den Vorsprüngen (61) an dem Kettenrad (60) und den Vorsprüngen (70) an den Zahnkränzen (68) der vorderen und der hinteren Trommel (42, 46) zu kämmen, um eine Relativbewegung zwischen dem Band (72) und der vorderen und der hinteren Trommel (42, 46) zu verhindern.

11. Plattformschneidwerk (10) nach Anspruch 10, ferner umfassend eine Mehrzahl von Mitnehmerleisten (77), die sich seitlich über den Förderer (48) erstrecken und dazu eingerichtet sind, die von der vorderen Trommel (42) aufgenommenen geschnittenen Kulturpflanzen zu erfassen, um die Kulturpflanzen über den hinteren Abschnitt (16) des Schneidwerksrahmens (12) zu transportieren.

12. Plattformschneidwerk (10) nach Anspruch 11, wobei der hintere Abschnitt (16) des Schneidwerksrahmens (12) eine ebene Decke (36) und einen ebenen Boden (38) aufweist, die horizontal voneinander beabstandet und fest zwischen gegenüberliegenden Seiten (18) des Schneidwerksrahmens (12) gekoppelt sind und einen zwischen ihnen angeordneten Innenraum (40) definieren.

13. Plattformschneidwerk (10) nach Anspruch 12, wobei die Bandzuführanordnung (34) in dem Innenraum (40) zwischen der Decke (36) und dem Boden (38) montiert ist.

## Revendications

1. Une plate-forme de coupe (10) destinée à être utilisée avec une machine agricole pour récolter des cultures agricoles dans un champ, comprenant :
un châssis de plate-forme de coupe (12) s'étendant entre une partie avant (14) et une partie arrière opposée (16), et latéralement entre des côtés opposés (18) ;
un ensemble de coupe (24) accouplé fonctionnellement à la partie avant (14), entre les côtés opposés (18), pour couper les cultures à récolter ;
une paire de bras de support (26) s'étendant entre une extrémité proximale (28) accouplée de manière fixe à la partie arrière (16) du châssis de plate-forme de coupe (12) et une extrémité distale opposée (30) espacée au-dessus de la partie avant (14) du châssis de plate-forme de coupe (12) ;
un rabatteur de récolte (32) accouplé de manière rotative entre les extrémités distales (30) des bras de support (26) pour venir en prise avec les cultures coupées par l'ensemble de coupe (24) ;
un ensemble d'alimentation à bande (34) accouplé au châssis de plate-forme de coupe (12) pour recevoir des cultures coupées provenant du rabatteur de récolte (32) et transporter les cultures coupées à travers la partie arrière (16) du châssis de plate-forme de coupe (12) jusqu'à la machine agricole, ledit ensemble d'alimentation à bande (34) comprenant un tambour avant (42) présentant une paroi extérieure (62) adjacente à l'ensemble de coupe (24), un tambour arrière (46) espacé du tambour avant (42) le long de la partie arrière (16) du châssis de plate-forme de coupe (12), et un convoyeur (48) tendu entre les tambours avant et arrière (42, 46) pour transporter la culture coupée à travers la partie arrière (16) du châssis de plate-forme de coupe (12), la paroi extérieure (62) du tambour avant (42) s'étendant entre une paire d'extrémités opposées (64) positionnées de manière adjacente aux côtés opposés (18) du châssis de plate-forme de coupe (12) ;
un système d'entraînement (56) monté sur le châssis de plate-forme de coupe (12) et accouplé fonctionnellement à l'un des tambours avant ou arrière (42, 46) pour entraîner en rotation l'ensemble d'alimentation à bande (34) ;
dans laquelle le tambour avant (42) comprend une pluralité de doigts (44) s'étendant radialement vers l'extérieur à partir de celui-ci et adaptés à tirer les cultures sous le tambour avant (42) vers la partie arrière (16) du châssis de plate-forme de coupe (12), chacun des doigts (44) étant accouplé fonctionnellement entre un arbre fixe (78) s'étendant axialement à travers le tambour avant (42) et une fente (67) formée dans la paroi extérieure (62) du tambour avant (42), de sorte que les doigts (44) font saillie à des distances variables par rapport à la paroi extérieure (62) lorsque le tambour avant (42) tourne autour de l'arbre fixe (78), afin d'éviter toute interférence avec le convoyeur (48).

2. La plate-forme de coupe (10) selon la revendication 1, dans laquelle les extrémités opposées (64) du tambour avant (42) définissent entre elles un axe central de rotation (A1) et sont accouplées de manière rotative entre les côtés opposés (18) du châssis de plate-forme de coupe (12).

3. La plate-forme de coupe (10) selon la revendication 2, dans laquelle le tambour arrière (46) s'étend entre des extrémités opposées (58) accouplées de manière rotative aux côtés opposés (18) du châssis de plate-forme de coupe (12).

4. La plate-forme de coupe (10) selon la revendication 3, dans laquelle l'arbre fixe (78) comprend des portions d'extrémité opposées (82) accouplées de manière fixe aux côtés opposés (18) du châssis de plate-forme de coupe (12) et au moins une portion décalée (80) entre les portions d'extrémité (82), définissant un axe de rotation décalé (A2) excentré par rapport à l'axe central de rotation (A1) du tambour avant (42).

5. La plate-forme de coupe (10) selon la revendication 4, dans laquelle les doigts (44) s'étendent entre une extrémité radialement extérieure (86) s'étendant à travers lesdites fentes respectives (67) dans le tambour avant (42) et une extrémité radialement intérieure opposée (88) accouplée de manière rotative à la portion décalée (80) de l'arbre fixe (78).

6. La plate-forme de coupe (10) selon la revendication 5, dans laquelle le tambour arrière (46) comprend au moins une roue dentée (60) accouplée de manière fixe à celui-ci et espacée latéralement entre les extrémités (58) du tambour arrière (46), chacune des roues dentées (60) comprenant une pluralité de saillies (61) adaptées à venir fonctionnellement en prise avec le convoyeur (48) et à entraîner celui-ci lorsque le système d'entraînement (56) fait tourner le tambour arrière (46).

7. La plate-forme de coupe (10) selon la revendication 6, dans laquelle le tambour avant (42) comprend au moins un pignon (68) disposé de manière espacée sur la paroi extérieure (62) entre les extrémités (64) de celui-ci, les pignons (68) étant alignés latéralement sur le tambour avant (42) avec les roues dentées (60) sur le tambour arrière (46).

8. La plate-forme de coupe (10) selon la revendication 7, dans laquelle chacun des pignons (68) comprend une pluralité de saillies (70) s'étendant radialement vers l'extérieur depuis la paroi extérieure (62) du tambour avant (42) et circonférentiellement autour de celle-ci, pour venir fonctionnellement en prise avec le convoyeur (48).

9. La plate-forme de coupe (10) selon la revendication 8, dans laquelle le convoyeur (48) comprend au moins une bande (72) accouplée fonctionnellement entre la roue dentée (60) et le pignon (68) pour entraîner le convoyeur (48) et relier en rotation les tambours avant et arrière (42, 46).

10. La plate-forme de coupe (10) selon la revendication 9, dans laquelle la bande (72) comprend une pluralité de saillies (76) s'étendant vers l'intérieur et adaptées à engrener avec les saillies (61) de la roue dentée (60) et les saillies (70) des pignons (68) des tambours avant et arrière (42, 46), afin d'empêcher un mouvement relatif entre la bande (72) et les tambours avant et arrière (42, 46).

11. La plate-forme de coupe (10) selon la revendication 10, comprenant en outre une pluralité de lattes (77) s'étendant latéralement à travers le convoyeur (48) et adaptées à venir en prise avec les cultures coupées reçues du tambour avant (42), afin de transporter la culture à travers la partie arrière (16) du châssis de plate-forme de coupe (12).

12. La plate-forme de coupe (10) selon la revendication 11, dans laquelle la partie arrière (16) du châssis de plate-forme de coupe (12) comprend un plafond plan (36) et un plancher plan (38), espacés horizontalement l'un de l'autre et accouplés de manière fixe entre les côtés opposés (18) du châssis de plate-forme de coupe (12), définissant entre eux un espace intérieur (40).

13. La plate-forme de coupe (10) selon la revendication 12, dans laquelle l'ensemble d'alimentation à bande (34) est monté dans l'espace intérieur (40) entre le plafond (36) et le plancher (38).
